# EUROPEAN PATENT APPLICATION

(11) **EP 2 685 358 A1**
(43) Date of publication of application: **15.01.2014**
(21) Application number: 12005149.5
(22) Date of filing: 12.07.2012
(51) Int. Cl.: G06F 3/041

(54) **Pressure sensitive input device**

(71) Applicant: Sony Mobile Communications AB, 221 88 Lund (SE)
(72) Inventor: Aberg, Peter, 288 31 Vinslöv (SE); Midholt, Magnus, 23 53 Lund (SE); Anton, Georgeta, 247 55 Dalby (SE); Rosqvist, Björn, 226 54 Lund (SE); Johansson, Allan, 224 56 Lund (SE); Klinghult, Gunnar, 223 59 Lund (SE); Kulle, Tomas, 245 63 Hjärup (SE); Knutsson, Lars, 275 95 Sjöbo (SE)
(74) Representative: Banzer, Hans-Jörg

(57) **Abstract**

The present invention relates to a pressure-sensitive input device comprising a touch layer (4), a frame (6), a first strain gauge device (12), and a second strain gauge device (13). The touch layer (4) is configured to change a dimension of the touch layer (4) due to a force being applied to the touch layer (4). The touch layer (4) is attached along an edge (5) of the touch layer (4) to the frame (6). The first strain gauge device (12) is arranged at the touch layer (4) and configured to detect a strain in a first direction (10) essentially along the edge (5) of the touch layer (4). The second strain gauge device (13) is arranged at the touch layer (4) and configured to detect a strain in a second direction (11) different from the first direction (10).

## Description

### FIELD OF THE INVENTION

The present invention relates to a pressure-sensitive input device, especially a pressure-sensitive input device to be used for detecting a force being applied from a user to a touch sensitive surface of a device, for example a mobile phone, a so called smartphone or a computer monitor.

### BACKGROUND OF THE INVENTION

Touch-based user interfaces are known in the art for controlling devices, especially mobile or portable devices, for example mobile phones and so called smartphones. A touch-based user interface may comprise a touch sensible panel which is arranged on top of a display forming a so called touch screen. The touch screen provides a very intuitive way of operating the device. Information can be displayed on the display and in response to the displayed information the user may touch the display for initiating actions or operations. The touch sensible panel may work by detecting a change of capacitance when the user approaches or touches the touch sensitive panel. The touch sensitive panel may provide a location information indicating where the user touches or approaches. Thus, a two-dimensional user interface can be provided. However, in connection with complex applications, a three-dimensional user interface may be advantageous. A third input dimension may be realized by measuring a force being applied by the user to the touch sensible panel. The force may be measured by strain gauge sensors on for example a glass window of the touch screen. However, strain gauge sensoring is very sensitive with respect to temperature changes and therefore a circuit evaluating signals from a strain gauge sensor cannot distinguish if the touch sensible panel is bent locally due to a force applied by the user to the panel or due to heating or cooling the panel.

Therefore, there is a need to provide a force measurement overcoming the above-described problems.

### SUMMARY OF THE INVENTION

According to the present invention, this object is achieved by a pressure sensitive input device as defined in claim 1 and a mobile device as defined in claim 13. The dependent claims define preferred and advantageous embodiments of the invention.

According to an aspect of the present invention, a pressure sensitive input device is provided. The pressure sensitive input device comprises a touch layer or touch panel which is configured to change a dimension of the touch layer due to a force being applied to the touch layer. The pressure sensitive input device comprises furthermore a frame for supporting the touch layer. The touch layer is attached along an edge of the touch layer to the frame. Furthermore, the pressure sensitive input device comprises a first strain gauge device and a second strain gauge device. The first and the second strain gauge devices are arranged at the touch layer. The first strain gauge device is configured to detect a strain in a first direction which extends essentially along the edge of the touch layer. The second strain gauge device is configured to detect a strain in a second direction which is different from the first direction. Preferably, the second direction is essentially perpendicular to the first direction.

According to the above-defined pressure sensitive input device, the touch layer is attached along the first direction to the frame. Therefore, when a touch force is applied to the touch layer, the touch layer will be deformed essentially in a direction perpendicular to the first direction and only very little in the first direction itself. When the first and second strain gauge devices are arranged in closed vicinity, both strain gauge devices will have essentially the same temperature. Thus, when a user touches the touch layer and changes the temperature of the touch layer, this influences the first strain gauge device as well as the second strain gauge device in essentially the same way. However, a force applied to the touch layer will essentially affect the second strain gauge device. Therefore, a temperature compensated strain can be calculated from signals from the first strain gauge device and the second strain gauge device.

A strain may comprise a tension or a compression acting on the touch layer which may deform the touch layer. The strain may be induced by a force applied to the touch layer or by a change of temperature of the touch layer extending or contracting the touch layer. The touch layer may comprise a touch force layer configured to be deformed by and to detect a force applied by a user touching the touch force layer, a capacitive touch layer comprising a conductive layer pattern for capacitively detecting a position where a user touches or approaches the capacitive touch layer, or a window glass of a display, or a combination of the above described layers.

According to an embodiment, the first strain gauge device and the second strain gauge device are stacked on each other with an isolating layer between the first strain gauge device and the second strain gauge device. By arranging the first and second strain gauge devices on top of each other, a very close vicinity between the two strain gauge devices can be achieved and thus a temperature change of the touch layer at the position where the first and second strain gauge devices are arranged, influences both strain gauge devices in the same way. Therefore, an accurate temperature compensation can be accomplished. Furthermore, double layered structures, made by printing or coating the touch layer, are frequently used in touch sensitive devices, for example for composing capacitive touch sensors for recognizing a position where a user touches the touch layer. Therefore, no additional processing steps are required for realizing the pressure sensitive input device and thus additional cost can be avoided.

Furthermore, the first strain gauge device and the second strain gauge device may be arranged beside each other or may be nested in a same layer. Crossing points between the first strain gauge device and the second strain gauge device may be realized via an isolated further layer.

The first strain gauge device and the second strain gauge device may comprise a piezoresistive material, for example indium tin oxide (ITO), or a constantan material. Thin layers of indium tin oxide have a high transparency and may therefore also be used for realizing a capacitive touch sensor in a display area such that the touch sensor does not disturb the information displayed by a display below the touch layer.

According to an embodiment, the first strain gauge device and the second strain gauge device have essentially a same resistance when no force is applied to the touch layer and the touch layer has a predetermined temperature. This can be achieved for example by dimensioning the first and second strain gauge devices in an appropriate way. For example, the first strain gauge device and the second strain gauge device may have identical dimensions and an identical layout with the first strain gauge device being rotated by 90° with respect to the second strain gauge device. Due to the same dimensions, both strain gauge devices provide the same responsiveness to temperature changes. Therefore, a temperature compensation can be easily accomplished.

According to an embodiment, the touch layer is glued along the edge of the touch layer to the frame. The glued area may be covered by a so called black print such that it cannot be seen by a user operating the touch layer. By gluing the touch layer to the frame, a high stiffness in the first direction along the edge of the touch layer can be achieved. Therefore, the first strain gauge device is not or nearly not influenced by a force being applied by the user to the touch layer.

The pressure sensitive input device may furthermore comprise a processing unit configured to determine the force applied to the touch layer based on a signal of the first strain gauge device and a signal of the second strain gauge device. The processing unit may compensate a temperature affected influence of the strain in the second direction based on the first signal. Therefore, an accurate strain and thus an accurate and temperature compensated force can be determined.

According to another embodiment, the first strain gauge device and the second strain gauge device represent a strain gauge pair. The touch layer is attached along a plurality of edges, for example a long four edges, of the touch layer to the frame. The input device comprises a plurality of strain gauge pairs which are arranged along the edges of the touch layer. Thus, a force being applied by a user to the touch layer can be determined no matter where the user touches the touch layer.

According to a further embodiment, each first strain gauge device of each pair of strain gauge pairs has a first terminal and a second terminal where the signal of the first strain gauge device is provided. Each second strain gauge device of each pair of strain gauge pairs has a third terminal and a fourth terminal, wherein the third terminal and the fourth terminal provide the corresponding output signal of the second strain gauge device. The first strain gauge device and the second strain gauge device of each pair of strain gauge pairs are coupled in a series connection. For the series connection the second terminal and the third terminal are coupled. The first terminals of a plurality or all of the strain gauge pairs are commonly coupled to a first supply voltage. In the same way, the fourth terminals of the plurality or all of the strain gauge pairs are coupled commonly to a second supply voltage. The connecting points between the two strain gauge devices of a strain gauge pair are coupled to a processing unit for evaluating a temperature compensated strain value. As all the strain gauge pairs are coupled to a common first and second supply voltage, a wiring of the pressure sensitive input device can be simplified. For example, when a certain number N of strain gauge pairs is arranged along the edges of the touch layer, N + 2 connecting lines are required for supplying the strain gauge pairs at the touch layer with the supply voltages and for coupling the strain gauge pairs to the processing unit.

The touch layer may comprise a touch layer of a capacitive touch sensor or a window glass of a display. Structures of the capacitive touch sensor, for example capacitive sensor patterns, may be printed or coated on the touch layer in the same way as the strain gauge devices. Similarly, electrical structures of a display may be coated or printed in the same way as the strain gauge devices. Therefore, no additional processing steps for processing the touch layer having the first and second strain gauge devices are required.

According to another aspect of the present invention, a device comprising a pressure sensitive input device is provided. The device comprises a mobile or portable device, for example a mobile phone, a personal digital assistant, a mobile music player or a navigation system.

Although specific features described in the above summary and in the following detailed description are described in connection with specific embodiments and aspects, it is to be understood that the features of the embodiments and aspects may be combined with each other unless specifically noted otherwise.

### BRIEF DESCRIPTION OF THE DRAWINGS

The invention will now be described in more detail with reference to the accompanying drawings.
Fig. 1 shows a mobile device according to an embodiment of the present invention.
Fig. 2 shows a strain gauge pair according to an embodiment of the present invention.
Fig. 3 shows a circuit diagram of a pressure sensitive input device according to an embodiment of the present invention.

### DETAILED DESCRIPTION OF PREFERRED EMBODIMENTS

In the following, exemplary embodiments of the invention will be described in more detail. It is to be understood that the features of the various exemplary embodiments described herein may be combined with each other unless specifically noted otherwise. Same reference signs in the various drawings and in the following description refer to similar or identical components.

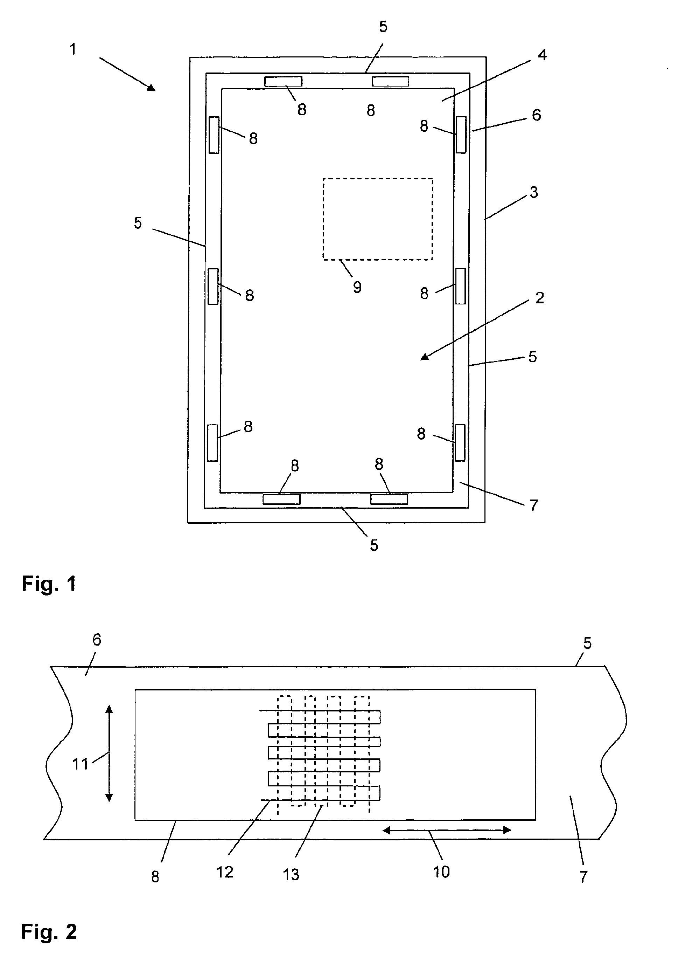

Fig. 1 shows a mobile device, for example a mobile telephone or a mobile smartphone, comprising a touch screen 2 and a housing 3. The touch screen 2 comprises a touch layer 4 and a display (not shown) below the touch layer 4. The touch layer 4 may be a glass window. The touch layer 4 is attached to the housing 3 along edges 5 of the touch layer 4. The housing 3 comprises a frame 6 surrounding the touch layer 4. The touch layer 4 may be glued or otherwise attached to the frame 6 in a gluing or connecting area 7 where the edge 5 of the touch layer 4 overlaps the frame 6 of the housing 3. E.g., the touch layer 4 may be attached to the frame 6 by an adhesive tape arranged between the touch layer 4 and the frame 6 in the gluing area 7. For covering the gluing area 7, a so called black print may be provided on the touch layer 4 which hides the gluing area 7 from being seen by the user. The black print may have any other color which may fit to the color of the housing 3 or as desired. Along the edges 5 strain gauge arrangements 8 are arranged. Each strain gauge arrangement 8 comprises a first strain gauge device which is arranged and configured such that it can detect a strain along the edge 5 of the touch layer 4, and a second strain gauge device which is arranged and configured such that it can detect a strain in a second direction perpendicular to the first direction. In the following, each strain gauge arrangement 8 will be called strain gauge pair 8. A structure of each strain gauge pair 8 will be described in more detail with respect to Fig. 2. The mobile device 1 comprises furthermore a processing unit 9 which may be coupled to the strain gauge devices of the strain gauge pairs 8, to the display (not shown) and to other components of the mobile device. The strain gauge pairs 8 may be printed or coated on the touch layer 4. The touch layer 4 may comprise further electrical components or structures, for example a so called touch pattern for capacitively detecting when a user is approaching or touching the touch layer 4.

Fig. 2 shows one of the strain gauge pairs 8 arranged in the gluing area 7 in more detail. The strain gauge pair 8 can also be arranged near or in close vicinity to the gluing area 7. The strain gauge pair 8 comprises the first strain gauge device 12 which is configured to detect a strain in the first direction along arrow 10 in the direction of the edge 5 of the touch layer, and the second strain gauge device 13 which is configured to detect a strain in a second direction along arrow 11 which is perpendicular to the first direction. The first strain gauge device 12 and the second strain gauge device 13 are stacked on each other with an isolating layer (not shown) between the first strain gauge device 12 and the second strain gauge device 13. As the frame 6 of the housing 3 and the touch layer 4 are laminated in the gluing area 7, a force applied by a user on an arbitrary position of the touch layer 4 invokes primarily a strain in the direction of arrow 11 and merely no strain in the direction of arrow 10. Therefore, strain due to a force applied to the touch layer 4 by a user primarily influences a signal from the first strain gauge device 12. On the other hand, when a temperature of the touch layer 4 changes, a dimension of the touch layer 4 changes in the direction of arrow 11 as well as in the direction of arrow 10. Therefore, due to a change of temperature, for example when the user is touching the touch layer 4 or when the whole mobile device 1 is heating up or cooling down, the signals of both strain gauge devices 12 and 13 are influenced. This effect can be operatively used by the processing unit 9 to compensate temperature changes when measuring a force being applied to the touch layer 4. Preferably, the first and second strain gauge devices 12 and 13 provide a same resistance value and same length and cover the same area such that temperature compensation can be easily accomplished.

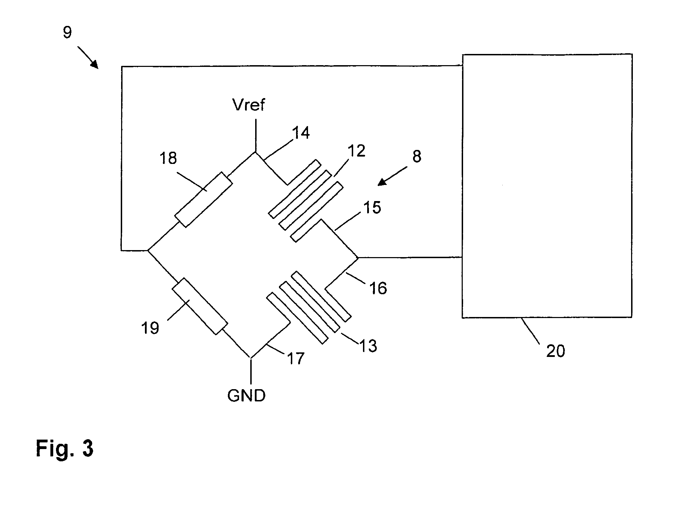

Fig. 3 shows a circuit diagram of the processing unit 9 for evaluating signals from the first strain gauge device 12 and the second strain gauge device 13. The first strain gauge device 12 has a first terminal 14 and a second terminal 15. The second strain gauge device 13 has a third terminal 16 and fourth terminal 17. The first strain gauge device 12 and the second strain gauge device 13 are coupled in a series connection by coupling the second terminal 15 and the third terminal 16. The first terminal 14 is coupled to a reference voltage Vref and the fourth terminal 17 is coupled to ground GND. Together with two resistors 18 and 19 the first strain gauge device 12 and the second strain gauge device 13 are connected in a Wheatstone bridge which is supplied by Vref and ground GND. An analog and digital system 20 comprising for example an analog-to-digital converter, filters and amplifiers, evaluates an output signal of the Wheatstone bridge. When a plurality of strain gauge pairs 8 are arranged along the edges of the touch layer 4, the reference voltage Vref and ground GND can be supplied commonly to all first and second strain gauge devices of all strain gauge pairs 8. The processing unit 9 only needs to be coupled to each strain gauge pair 8 via a single electrical connection coupled to the connecting point between the second terminal 15 and the third terminal 16 of each strain gauge pair 8. Therefore, for example for wiring the ten strain gauge pairs 8 shown in Fig. 1, only ten electrical connections to the processing unit 9 and additionally two electrical connections to the voltage reference Vref and Ground GND are required for connecting the touch layer 4. This reduces complexity of the wiring of the touch layer 4.

The first and second strain gauge devices 12, 13 may be made of indium tin oxide (ITO) which is a material which may also be used for other layers of for example a touch sensitive surface for capacitive touch sensing or for wiring electrical structures of a liquid crystal display (LCD). Therefore, manufacturing of the first and second strain gauge devices 12, 13 does not require additional processing steps. The area underneath the black print on the touch layer or window glass 4 is perfect from mechanical structure point of view, as the strain or compression is concentrated to just outside a display area in a laminated window/touch/LCD system. Other materials than ITO could be potentially be used, but it is advantageous to reuse material already available in the processes for a display or touch panel manufacturing to benefit cost advantages. The temperature compensation will be done by utilizing the tension/compression sensing device 12 in one direction and let the temperature compensated strain gauge device 13 be rotated by 90°. Software in the processing unit 9 will make it feasible to run the capacitive touch sensing system of the touch layer 4 and the force sensing system provided by the strain gauge pairs 8 working together.

While exemplary embodiments have been described above, various modifications may be implemented in other embodiments. For example, the number of strain gauge pairs 8 may be varied as required. Furthermore, the number of meander slopes shown in Figs. 2 and 3 is only exemplary and may be varied as required by application.

Finally, it is to be understood that all the embodiments described above are considered to be comprised by the invention as it is defined by the appended claims.

## Claims

1. A pressure-sensitive input device, comprising:
- a touch layer (4) configured to change a dimension of the touch layer (4) due to a force being applied to the touch layer (4),
- a frame (6) for supporting the touch layer (4), the touch layer (4) being attached along an edge (5) of the touch layer (4) to the frame (6),
- a first strain gauge device (12) arranged at the touch layer (4) and configured to detect a strain in a first direction (10) essentially along the edge (5) of the touch layer (4), and
- a second strain gauge device (13) arranged at the touch layer (4) and configured to detect a strain in a second direction (11) different from the first direction (10).

2. The pressure-sensitive input device according to claim 1, wherein the second direction (11) is essentially perpendicular to the first direction (10).

3. The pressure-sensitive input device according to claim 1 or 2, wherein the first strain gauge device (12) and the second strain gauge device (13) are stacked on each other with an isolating layer between the first strain gauge device (12) and the second strain gauge device (13).

4. The pressure-sensitive input device according to claim 1 or 2, wherein the first strain gauge device (12) and the second strain gauge device (13) are arranged beside each other or nested in a same layer.

5. The pressure-sensitive input device according to any one of the preceding claims, wherein the first strain gauge device (12) and the second strain gauge device (13) comprise a piezoresistive material.

6. The pressure-sensitive input device according to claim 5, wherein the first strain gauge device (12) and the second strain gauge device (13) have essentially a same resistance value when no force is applied to the touch layer (4).

7. The pressure-sensitive input device according to any one of the preceding claims, wherein the first strain gauge device (12) and the second strain gauge device (13) comprise indium tin oxide or constantan.

8. The pressure-sensitive input device according to any one of the preceding claims, wherein the touch layer (4) is glued along the edge (5) of the touch layer (4) to the frame (6).

9. The pressure-sensitive input device according to any one of the preceding claims, further comprising:
- a processing unit (9) configured to determine the force being applied to the touch layer (4) based on a signal of the first strain gauge device (12) and a signal of the second strain gauge device (13) such that a temperature affected influence on the strain in the second direction (11) is compensated based on the first signal.

10. The pressure-sensitive input device according to any one of the preceding claims, wherein the first strain gauge device (12) and the second strain gauge device (13) represent a strain gauge pair (8), wherein the touch layer (4) is attached along a plurality of edges (5) of the touch layer (4) to the frame (6), wherein the input device comprises a plurality of the strain gauge pairs (8) which are arranged along the edges (5) of the touch layer (4).

11. The pressure-sensitive input device according claim 10, wherein each first strain gauge device (12) of each pair of strain gauge pairs (8) has a first terminal (14) and a second terminal (15), and each second strain gauge device (13) of each pair of strain gauge pairs (8) has a third terminal (16) and a fourth terminal (17), wherein the first strain gauge device (12) and the second strain gauge device (13) of each pair of strain gauge pairs (8) are coupled in a series connection by coupling the second terminal (15) and the third terminal (16), wherein the first terminals (14) of a plurality of the strain gauge pairs (8) are commonly coupled to a first supply voltage (Vref) and the fourth terminals (17) of the plurality of the strain gauge pairs (8) are commonly coupled to a second supply voltage (GND).

12. The pressure-sensitive input device according to any one of the preceding claims, wherein the touch layer (4) comprises a touch layer (4) of a capacitive touch sensor or a window glass of a display.

13. A mobile device comprising a pressure-sensitive input device according to any one of the preceding claims, wherein the mobile device (1) comprises at least one device of a group consisting of a mobile phone, a personal digital assistant, a mobile music player, and a navigation system.
